# EUROPÄISCHE PATENTSCHRIFT

(11) **EP 2 754 342 B1**
(45) Veröffentlichungstag und Bekanntmachung des Hinweises auf die Patenterteilung: **17.06.2015**
(21) Anmeldenummer: 14150628.7
(22) Anmeldetag: 09.01.2014
(51) Int. Cl.: A01B 15/18, A01B 17/00, A01C 5/06, A01C 23/02

(54) **Vorrichtung zur Bearbeitung einer landwirtschaftlichen Bodenfläche**
Device for processing an agricultural soil surface
Dispositif de traitement d'une surface agricole

(30) Priorität: 14.01.2013 DE 202013100178 U
(43) Veröffentlichungstag der Anmeldung: 16.07.2014
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- DE-A1- 3 404 811
- DE-U1- 20 012 357
- DE-U1- 29 715 194
- US-A- 3 115 192
- US-A- 5 752 453

## Beschreibung

Die Erfindung betrifft eine Vorrichtung zur Bearbeitung einer landwirtschaftlichen Bodenfläche mit einem quer zur Fahrtrichtung an ein Zugfahrzeug koppelbaren Querträger, an dem wenigstens eine Gülleausbringeinheit und wenigstens eine zugeordnete Scheibensech gehaltert ist.

Aus der DE 297 15 194 U1 ist eine derartige Vorrichtung bekannt, bei der die Scheibensechen den Boden zunächst schlitzen, damit die Gülle dann gezielt in den Schlitz eingebracht werden kann. Die Scheibensechen sind mit einem bestimmten Winkel zur Fahrtrichtung ausgerichtet, sodass sich eine bestimmte Breite des Schlitzes ergibt. In der Praxis hat sich jedoch gezeigt, dass sich die Breite und Tiefe des durch die Scheibensech erzeugten Schlitzes in starkem Maße von der Beschaffenheit des Bodens abhängt und es daher nicht immer gewährleistet ist, dass die Gülle in ausreichender Tiefe in den Boden eingebracht wird.

Der Erfindung liegt daher die Aufgabe zugrunde die oben beschriebene Vorrichtung zur Bearbeitung einer landwirtschaftlichen Bodenfläche dahingehend zu verbessern, dass der durch die Scheibensech erzeugbare Schlitz an die Bodenbeschaffenheit angepasst werden kann.

Erfindungsgemäß wird diese Aufgabe durch eine Vorrichtung zur Bearbeitung einer landwirtschaftlichen Bodenfläche mit einem quer zur Fahrtrichtung an ein Zugfahrzeug ankoppelbaren Querträger gelöst, an dem wenigstens eine Gülleausbringeinheit und wenigstens eine zugeordnete Scheibensech gehaltert ist, wobei die Scheibensech an einer am Querträger befestigten Halterung um eine Sechachse drehbar gelagert ist, und wobei die Halterung um eine zur Bodenfläche im Wesentlichen vertikale Achse schwenkbar ist, sodass die Scheibensech mit unterschiedlichen Winkeln zur Fahrrichtung anstellbar ist.

Durch die Anstellbarkeit der Scheibensech bezogen auf die Fahrtrichtung kann insbesondere die Breite des erzeugten Schlitzes gezielt beeinflusst werden. So wird man bei sandigen oder leicht krümeligen Böden einen eher größeren Winkel wählen, während bei klebrigen Böden ein kleinerer Winkel ausreichend ist.

Weitere Ausgestaltungen der Erfindung sind Gegenstand der Unteransprüche.

Gemäß einem bevorzugten Ausführungsbeispiel der Erfindung sind am Querträger eine Vielzahl von Gülleausbringeinheiten mit zugeordneten Scheibensechen gelagert, wobei es besonders zweckmäßig ist, wenn jeweils wenigstens eine Gülleausbringeinheit und wenigstens eine Scheibensech, vorzugsweise jeweils zwei Gülleausbringeinheiten und zwei Scheibensechen, eine Einheit bilden, die zur Ermöglichung einer Kurvenfahrt um eine zur Bodenfläche im Wesentlichen vertikale Pendelachse schwenkbar am Träger gehaltert ist. Die Einheit kann dabei insbesondere in einem Winkelbereich von +/- 20° bis +/- 40° um die Pendelachse schwenkbar am Querträger gehaltert sein.

Zur Anstellung der Scheibensech bezüglich der Fahrtrichtung beträgt der Verstellbereich der Halterung um die zur Bodenfläche im Wesentlichen vertikale Achse vorzugsweise +/- 5° bis +/- 20°. Zur Verstellung kann hierfür eine mechanische oder hydraulische Verstelleinrichtung vorgesehen werden. Gemäß einem Ausführungsbeispiel weist die Verstelleinrichtung eine Nut-Zapfenverbindung auf. Weiterhin kann sie eine Verstellspindel oder einem Hydraulikzylinder umfassen. Des Weiteren ist vorgesehen, dass die Scheibensech zwischen Querträger und Gülleausbringeinheit angeordnet ist, sodass die Gülle in den Schlitz eingebracht werden kann.

Gemäß einer weiteren Ausgestaltung der Erfindung bilden wenigstens eine Gülleausbringeinheit und wenigstens eine Scheibensech, vorzugsweise zwei Gülleausbringeinheiten und zwei Scheibensechen, eine Einheit, die um eine parallel zum Querträger ausgerichtete, horizontale Schwenkachse am Querträger gehaltert ist. Dabei kann weiterhin vorgesehen werden, dass zwischen der um die horizontale Schwenkachse verschwenkbaren Einheit und dem Querträger wenigstens ein Federelement zur Anpassung an Unebenheiten der landwirtschaftlichen Bodenfläche vorgesehen ist, welches die Einheit bei der Bearbeitung der landwirtschaftlichen Bodenfläche in Richtung der Bodenfläche drückt.

In einer weiteren Ausgestaltung der Erfindung ist die Sechachse der Scheibensech weiterhin um eine zur Sechachse senkrechte und im Wesentlichen horizontal ausgerichtete Pendelachse verstellbar. Der Verstellbereich der Sechachse um diese Pendelachse beträgt insbesondere +/- 10° bis +/- 25°. Mit dieser zusätzlichen Verstellmöglichkeit ist eine weitere Möglichkeit zur Beeinflussung der Form des sich ergebenen Schlitzes möglich. Je größer der Winkel, um so breiter wird der Schlitz. Außerdem erleichtert diese zusätzliche Anstellung der Scheibensech das Eindringen in schwere Böden.

Anhand der nachfolgenden Beschreibung und der Zeichnung wird ein Ausführungsbeispiel der Erfindung näher beschrieben.

In der Zeichnung zeigen
- Fig. 1: eine dreidimensionale Darstellung einer Vorrichtung zur Bearbeitung einer landwirtschaftlichen Bodenfläche,
- Fig. 2: eine Draufsicht einer aus zwei Gülleausbringeinheiten und zwei Scheibensechen bestehenden Einheit gemäß einem ersten Ausführungsbeispiel,
- Fig. 3: eine Schnittdarstellung der Scheibensech mit Halterung und der horizontalen Pendelachse,
- Fig. 4: eine Detailansicht im Bereich der Halterung der Einheit am Querträger,
- Fig. 5: eine Draufsicht der Einheit gemäß der Fig. 2 während einer Kurvenfahrt,
- Fig. 6: eine Draufsicht einer aus zwei Gülleausbringeinheiten und zwei Scheibensechen bestehenden Einheit gemäß einem zweiten Ausführungsbeispiel,
- Fig. 7: eine Draufsicht der Einheit, wobei die Scheibensech mit unterschiedlichen Winkeln zur Fahrtrichtung ausgerichtet ist,
- Fig. 8: eine Vorderansicht der Einheit gemäß Fig. 7,
- Fig. 9: eine Draufsicht der, bei der zusätzlich die Sechachse um die Pendelachse geschwenkt ist und
- Fig. 10: eine Vorderansicht der Einheit gemäß Fig. 9.

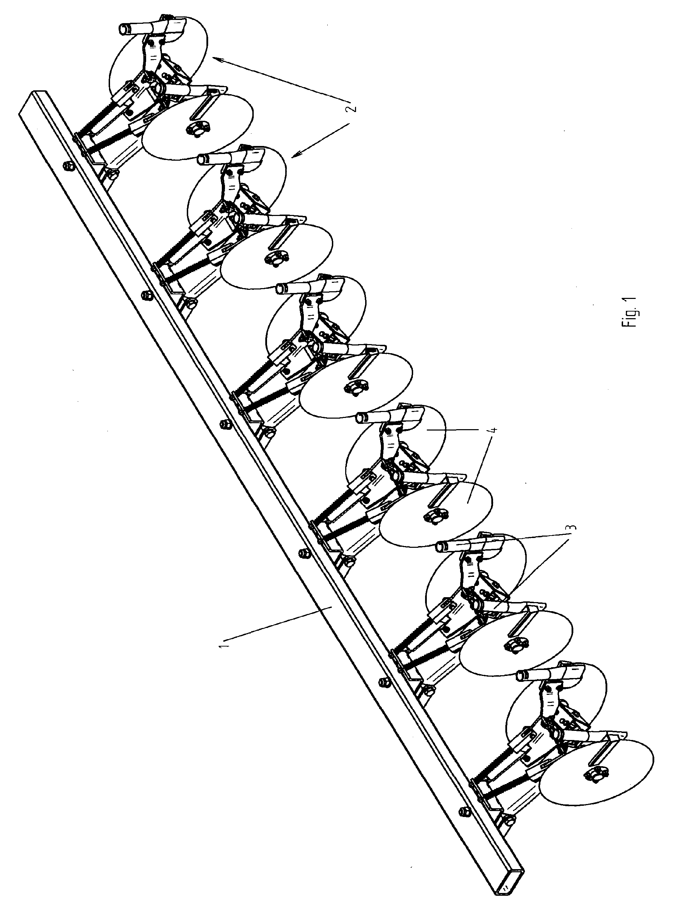

Die in Fig. 1 dargestellte Vorrichtung zur Bearbeitung einer landwirtschaftlichen Bodenfläche weist einen quer zur Fahrtrichtung an ein nicht näher dargestelltes Zugfahrzeug koppelbaren Querträger 1 auf, an dem eine Vielzahl von Einheiten 2 gehaltert sind, die jeweils zwei Gülleausbringeinheiten 3 und zwei Scheibensechen 4 umfassen. Der Querträger 1 kann beispielsweise eine Breite von 5 m aufweisen, wobei sechs Einheiten 2 quer zur Fahrtrichtung nebeneinander angeordnet sind.

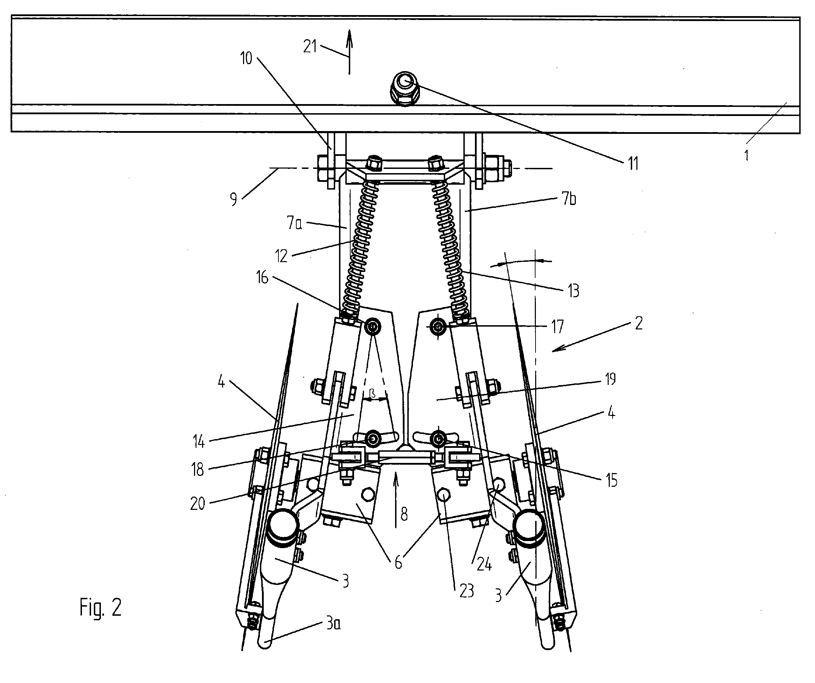

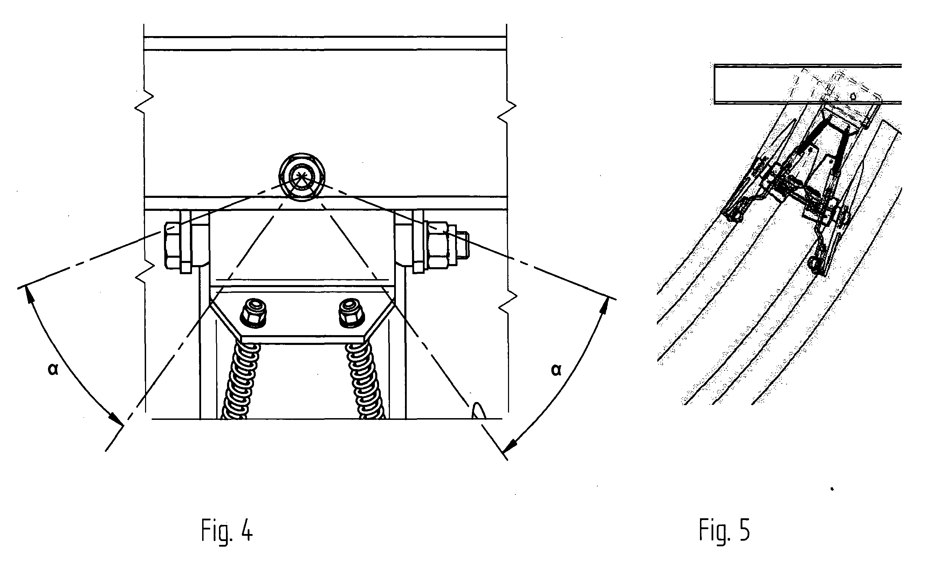

Anhand der Figuren 2 bis 4 wird die Einheit 2 näher erläutert. Jede Scheibensech 4 ist drehbar um eine Sechachse 5 in einer Halterung 6 gelagert. Die Einheit 2 weist ferner einen Rahmen 7 mit zwei Schwingen 7a, 7b auf, der um eine parallel zum Querträger 1 ausgerichtete, horizontale Schwenkachse 9 in einer Anbaukonsole 10 am Querträger 1 schwenkbar gehaltert ist. Die Anbaukonsole 10 ist außerdem um eine zur Bodenfläche im Wesentlichen vertikale Pendelachse 11 schwenkbar am Querträger 1 gehaltert ist. Die Einheit 2 kann daher in einer Kurvenfahrt (Fig. 5) um die Pendelachse 11 schwenken, deren Schwenkbereich beispielsweise +/- 30° beträgt.

Die horizontale Schwenkachse 9, mit der die Einheit 2 über die Anbaukonsole 10 am Querträger 1 gehaltert ist, ermöglicht einen Ausgleich von Bodenunebenheiten/Steinen, indem die Einheit in vertikaler Richtung ausweichen kann. Um dennoch einen ausreichenden Bodenkontakt zu gewährleisten, wird der die beiden Schwingen 7a und 7b aufweisende Rahmen 7 über Federelemente 12, 13 in Richtung der zu bearbeitenden Bodenfläche gedrückt.

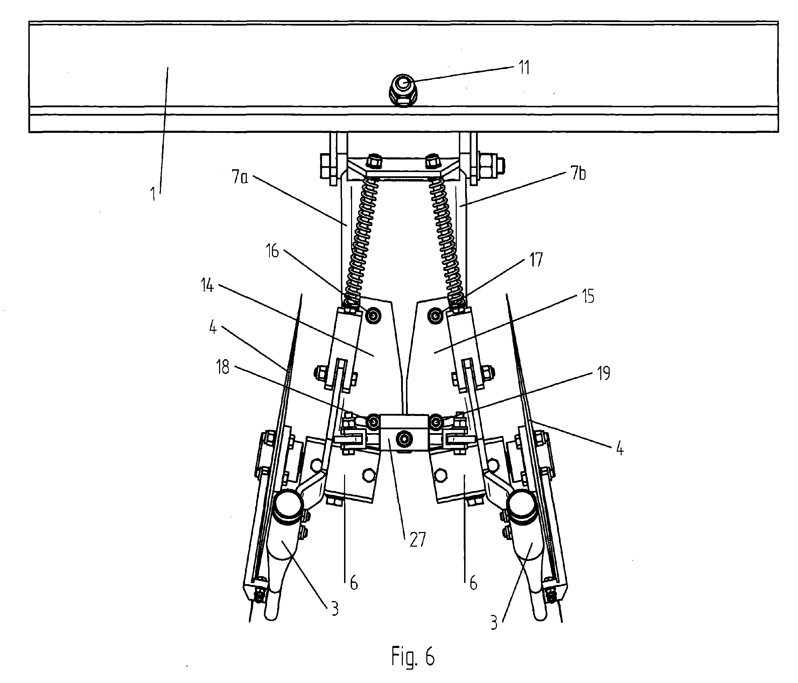

Die Halterungen 6 der beiden Scheibensechen 4 sind jeweils auf einer Schwenkplatte 14, 15 gehaltert, die jeweils um im Wesentlichen vertikale Achsen 16, 17 am schwenkbar am Rahmen 7 gehaltert sind. Zur Begrenzung des Verstellbereichs der Schwenkplatten 14, 15 ist eine Verstelleinrichtung 8 vorgesehen, die jeweils eine Nut-Zapfenverbindung 18, 19 und eine gemeinsame Verstellspindel 20 umfasst. Der Verstellbereich β um die vertikalen Achsen 16, 17 beträgt beispielsweise +/- 10°. Bei einem Winkel von 0° ist die Ebene der Scheibensech 4 genau in Fahrtrichtung ausgerichtet. Im Ausführungsbeispiel 2 sind die Scheibensechen 4 mit einem Winkel von etwa 10° zur Fahrtrichtung 21 eingestellt. Anstelle der Verstellspindel 20 gemäß Fig. 2 kann die Verstelleinrichtung auch einen Hydraulikzylinder 27 umfassen, wie dies in Fig. 6 dargestellt ist.

Die Gülleausbringeinheit 3 ist als düsenartiges Endstück ausgebildet, an dessen oberen Ende ein nicht näher dargestellter, zum Güllefass führender Schlauch angebracht werden kann. Am unteren Ende der Gülleausbringeinheit ist ein Schleppschuh 3a vorgesehen, der bei der Bearbeitung der landwirtschaftlichen Bodenfläche bis in den von der Scheibensech gebildeten Schlitz hineinragt und eine Öffnung zum Ausbringen der Gülle aufweist. Die Scheibensech 4 ist zwischen Querträger 1 und Gülleausbringeinheit 3 angeordnet, sodass die Gülle in den gebildeten Schlitz eingebracht werden kann. Im Feldbetrieb kann weiterhin vorgesehen werden, dass die Einheiten 2 geeignete Mittel, beispielsweise Federzinken, aufweisen, um die gebildeten Schlitze bzw. Furchen wieder zu schließen.

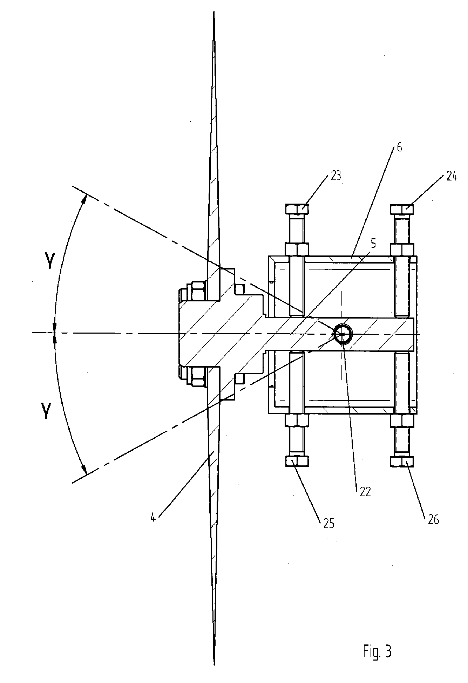

Neben der in Fig. 2 veranschaulichten Verstellmöglichkeit der Scheibensech 4 um die vertikale Achse 16 bzw. 17 wird in Fig. 3 noch eine weiteren Verstellmöglichkeit aufgezeigt. Hiernach ist die Sechachse 5 der Scheibensech zusätzlich um eine zur Sechachse senkrecht und im Wesentlichen horizontal ausgerichtete Pendelachse 22 verstellbar, wobei der Verstellbereich γ der Sechachse um diese Pendelachse +/- 10° bis +/- 25° betragen kann. Die Sechachse 5 ist hierzu in der Halterung 6 um die Pendelachse 22 schwenkbar gehaltert, wobei die Ausrichtung der Sechachse durch vier Schrauben 23 bis 26 einstellbar ist.

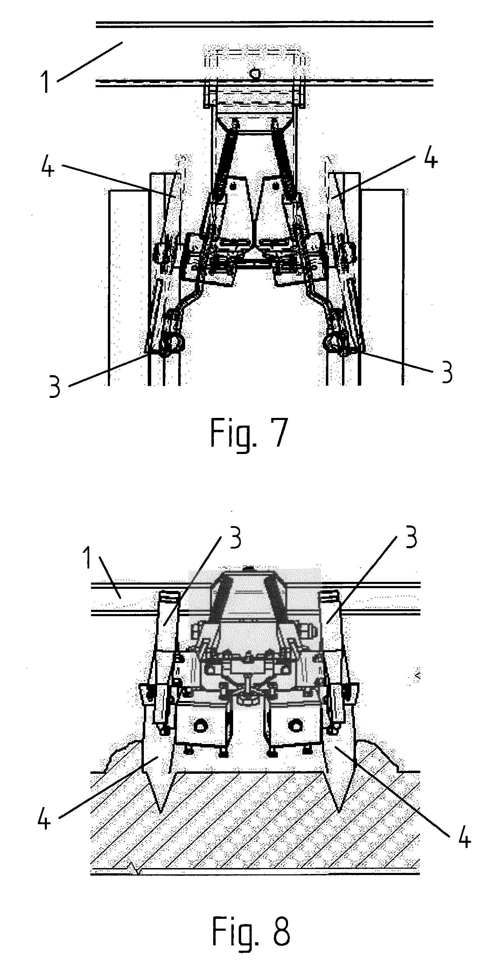

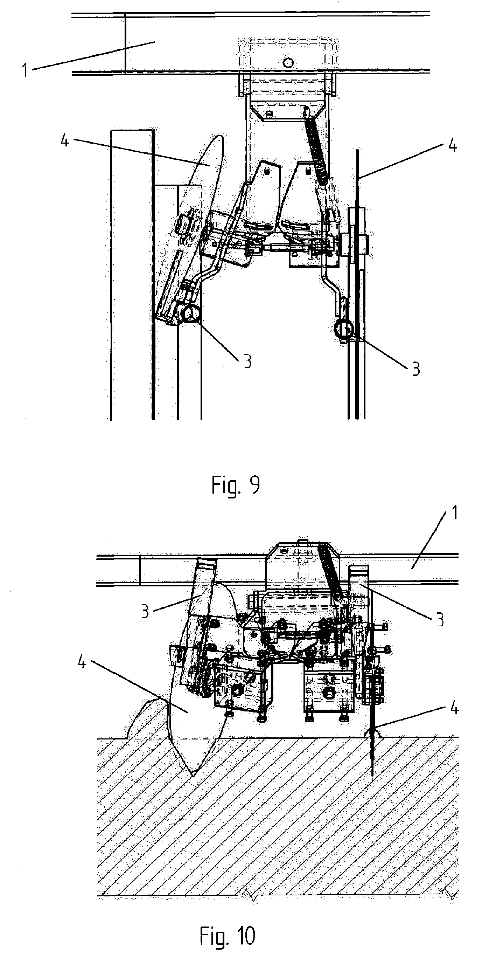

Zweckmäßigerweise werden die Scheibensechen einer Einheit mit gleichen Winkeln, aber entsprechend entgegengesetzt eingestellt, wie das aus den Fig. 2, 7 und 8 hervorgeht. Im Folgenden wird anhand der Figuren 7 bis 10 veranschaulicht, wie sich ein bestimmter Anstellwinkel (Einstellwinkel β um die vertikale Achse 16 bzw. 17) mit und ohne zusätzlicher Schrägstellung um die Pendelachse 22 auf die Form des Schlitzes auswirkt. In den Fig. 7, 8 ist die Scheibensech 4 lediglich durch Schwenken um die Achsen 16 bzw. 17 angestellt, während in den Fig. 9 und 10 noch eine zusätzlicher Schrägstellung um die Pendelachse 22 hinzugekommen ist. Der sich ergebende Schlitz gemäß Fig. 10 ist dadurch deutlich breiter. Außerdem schneidet die Scheibensech durch die zusätzliche Schrägstellung leichter in den Boden. Lediglich zu Illustrationszwecken ist die rechter Scheibensech 4 in den Fig. 9 und 10 ohne Anstellung und Schrägstellung dargestellt.

Bei den der Erfindung zugrundeliegenden Versuchen haben sich im Wesentlichen folgende Einstellungen als zweckmäßig erwiesen. Primär wird die Breite des Schlitzes mit dem Anstellwinkel der Scheibensech 4 zur Fahrtrichtung (also dem Einstellwinkel um die vertikalen Achsen 16, 17) bestimmt. Dabei wird man die erzeugte Schlitzbreite vor allem an die in den Boden einzubringende Güllemenge anpassen (je größer die einzubringende Güllemenge desto breiter der Schlitz). Dabei ist außerdem zu berücksichtigen, dass die sich ergebende Schlitzbreite nicht nur vom Anstellwinkel der Scheibensech, sondern auch von der Beschaffenheit des Bodens abhängt (je feinkrümeliger und sandiger der Boden ist, um so stärker muss die Scheibensech angestellt werden, um eine bestimmte Schlitzbreite zu erzeugen).

Mit der zusätzlichen Schrägstellung der Scheibensech um die Pendelachse 22 kann darüber hinaus eine weitere Verbreiterung des Schlitzes und ein erleichtertes Eindringen der Scheibensech in den Boden bewirkt werden. Man wird daher die Scheibensech insbesondere bei schweren Böden zusätzlich um die Pendelachse 22 schräg stellen.

## Patentansprüche

1. Vorrichtung zur Bearbeitung einer landwirtschaftlichen Bodenfläche mit einem quer zur Fahrrichtung an ein Zugfahrzeug koppelbaren Querträger (1), an dem wenigstens eine Gülleausbringeinheit (3) und wenigstens eine zugeordnete Scheibensech (4) gehaltert ist, wobei die Scheibensech (4) an einer am Querträger (1) befestigten Halterung (6) um eine Sechachse (5) drehbar gelagert ist,
**dadurch gekennzeichnet, dass** die Halterung (6) um eine zur Bodenfläche im Wesentlichen vertikale Achse (16, 17) schwenkbar ist, sodass die Scheibensech mit unterschiedlichen Winkeln zur Fahrrichtung (21) anstellbar ist.

2. Vorrichtung nach Anspruch 1, **dadurch gekennzeichnet, dass** wenigstens eine Gülleausbringeinheit (3) und wenigstens eine Scheibensech (4), vorzugsweise zwei Gülleausbringeinheiten (3) und zwei Scheibensechen (4), eine Einheit (2) bilden, die zur Ermöglichung einer Kurvenfahrt um eine zur Bodenfläche im Wesentlichen vertikalen Pendelachse (11) schwenkbar am Querträger (1) gehaltert ist.

3. Vorrichtung nach Anspruch 2, **dadurch gekennzeichnet, dass** die Einheit (2) in einem Winkelbereich (α) von +/- 20° bis +/- 40° um die Pendelachse (11) schwenkbar am Querträger (1) gehaltert ist.

4. Vorrichtung nach Anspruch 2 oder 3, **dadurch gekennzeichnet, dass** eine Vielzahl von wenigstens eine Gülleausbringeinheit (3) und wenigstens eine Scheibensech (4), vorzugsweise zwei Gülleausbringeinheiten (3) und zwei Scheibensechen (4), aufweisende Einheiten (2) quer zur Fahrrichtung (21) nebeneinander am Querträger (1) gehaltert sind.

5. Vorrichtung nach einem oder mehreren der vorhergehenden Ansprüche, **dadurch gekennzeichnet, dass** der Verstellbereich (β) der Halterung (6) um die zur Bodenfläche im Wesentlichen vertikale Achse (16, 17) +/- 5° bis +/- 20° beträgt.

6. Vorrichtung nach Anspruch 5, **dadurch gekennzeichnet, dass** zur Verstellung der Halterung (6) um die vertikale Achse (16, 17) eine mechanische oder hydraulische Verstelleinrichtung (8) vorgesehen ist.

7. Vorrichtung nach Anspruch 6, **dadurch gekennzeichnet, dass** die Verstelleinrichtung (8) eine Nut-Zapfenverbindung (18, 19) umfasst.

8. Vorrichtung nach Anspruch 5 oder 6, **dadurch gekennzeichnet, dass** die Verstelleinrichtung (8) eine Verstellspindel (20) oder einen Hydraulikzylinder (27) umfasst.

9. Vorrichtung nach einem oder mehreren der vorhergehenden Ansprüche, **dadurch gekennzeichnet, dass** die Scheibensech (4) zwischen Querträger (1) und Gülleausbringeinheit (3) angeordnet ist.

10. Vorrichtung nach einem oder mehreren der vorhergehenden Ansprüche, **dadurch gekennzeichnet, dass** wenigstens eine Gülleausbringeinheit (3) und wenigstens eine Scheibensech (4), vorzugsweise zwei Gülleausbringeinheiten (3) und zwei Scheibensechen (4), eine Einheit (2) bilden, die um eine parallel zum Querträger (1) ausgerichtete, horizontale Schwenkachse (9) am Querträger (1) schwenkbar gehaltert ist.

11. Vorrichtung nach Anspruch 10, **dadurch gekennzeichnet, dass** zwischen der um die horizontale Schwenkachse (9) verschwenkbaren Einheit (2) und dem Querträger (1) wenigstens ein Federelement (12, 13) zur Anpassung an Unebenheiten der landwirtschaftlichen Bodenfläche vorgesehen ist, welches die Einheit (2) bei der Bearbeitung der landwirtschaflichen Bodenfläche in Richtung der Bodenfläche drückt.

12. Vorrichtung nach einem oder mehreren der vorhergehenden Ansprüche, **dadurch gekennzeichnet, dass** die Sechachse (5) der Scheibensech (4) weiterhin um eine zur Sechachse (5) senkrechte und im Wesentlichen horizontal ausgerichteten Pendelachse (22) verstellbar ist.

13. Vorrichtung nach Anspruch 12, **dadurch gekennzeichnet, dass** der Verstellbereich (γ) der Sechachse (5) um die Pendelachse (22) +/- 10° bis +/- 25° beträgt.

## Claims

1. Device for processing an agricultural ground surface with a transverse carrier (1) which can be coupled to a pulling vehicle transversely relative to the travel direction and on which at least one slurry dispensing unit (3) and at least one associated disc coulter (4) is retained, the disc coulter (4) being rotatably supported about a coulter axis (5) on a retention member (6) which is secured to the transverse carrier (1),
**characterised in that** the retention member (6) can be pivoted about an axis (16, 17) which is substantially vertical relative to the ground surface so that the disc coulter can be positioned at different angles with respect to the travel direction (21).

2. Device according to claim 1, **characterised in that** at least one slurry dispensing unit (3) and at least one disc coulter (4), preferably two slurry dispensing units (3) and two disc coulters (4), form a unit (2) which is retained on the transverse carrier (1) so as to be able to be pivoted about a pivoted axle (11) which is substantially vertical with respect to the ground surface in order to enable travel on bends.

3. Device according to claim 2, **characterised in that** the unit (2) is retained on the transverse carrier (1) so as to be able to be pivoted about the pivoted axle (11) in an angular range (a) from ± 20° to ± 40°.

4. Device according to claim 2 or claim 3, **characterised in that** a large number of units (2) which have at least one slurry dispensing unit (3) and at least one disc coulter (4), preferably two slurry dispensing units (3) and two disc coulters (4), are retained beside each other on the transverse carrier (1) transversely relative to the travel direction (21).

5. Device according to one or more of the preceding claims, **characterised in that** the adjustment range (ß) of the retention member (6) about the axis (16, 17) which is substantially vertical with respect to the ground surface is from ± 5° to ± 20°.

6. Device according to claim 5, **characterised in that** a mechanical or hydraulic adjustment device (8) is provided in order to adjust the retention member (6) about the vertical axis (16, 17) .

7. Device according to claim 6, **characterised in that** the adjustment device (8) comprises a mortise and tenon joint (18, 19) .

8. Device according to claim 5 or claim 6, **characterised in that** the adjustment device (8) comprises an adjustment spindle (20) or a hydraulic cylinder (27).

9. Device according to one or more of the preceding claims, **characterised in that** the disc coulter (4) is arranged between the transverse carrier (1) and slurry dispensing unit (3).

10. Device according to one or more of the preceding claims, **characterised in that** at least one slurry dispensing unit (3) and at least one disc coulter (4), preferably two slurry dispensing units (3) and two disc coulters (4), form a unit (2) which is retained on the transverse carrier (1) so as to be able to be pivoted about a horizontal pivot axis (9) which is orientated parallel with the transverse carrier (1).

11. Device according to claim 10, **characterised in that**, between the unit (2) which can be pivoted about the horizontal pivot axis (9) and the transverse carrier (1), there is provided for adapting to occurrences of unevenness of the agricultural ground surface at least one resilient element (12, 13) which presses the unit (2) in the direction of the ground surface when the agricultural ground surface is processed.

12. Device according to one or more of the preceding claims, **characterised in that** the coulter axis (5) of the disc coulter (4) can further be adjusted about a pivoted axle (22) which is perpendicular with respect to the coulter axis (5) and which is orientated in a substantially horizontal manner.

13. Device according to claim 12, **characterised in that** the adjustment range (γ) of the coulter axis (5) about the pivoted axle (22) is from ± 10° to ± 25°.

## Revendications

1. Dispositif de traitement d'une surface agricole doté d'une traverse (1), qui peut être couplée, transversalement par rapport à la direction de marche, à un véhicule tracteur et à laquelle sont fixés au moins une unité d'épandage de lisier (3) et au moins un coutre en forme de disque (4) y associé, sachant que le coutre en forme de disque (4) est monté, à rotation autour d'un axe (5), sur un support (6) qui est fixé à la traverse (1),
**caractérisé en ce que** le support (6) peut être pivoté autour d'un axe (16, 17) sensiblement perpendiculaire à la surface du sol, de telle manière que le coutre en forme de disque puisse être orienté dans toutes directions de marche (21) sous des angles différents.

2. Dispositif selon la revendication 1,
**caractérisé en ce qu'au** moins une unité d'épandage de lisier (3) et au moins un coutre en forme de disque (4), de préférence deux unités d'épandage de lisier (3) et deux coutres en forme de disque (4), forment une unité (2), qui, pour permettre la prise de virages, est fixée à la traverse (1), à pivotement autour d'un axe oscillant (11) sensiblement perpendiculaire à la surface du sol.

3. Dispositif selon la revendication 2,
**caractérisé en ce que** l'unité (2) est maintenue sur la traverse (1) en pouvant pivoter autour d'un axe oscillant (11) dans une plage angulaire (α) de ±20° à ±40°.

4. Dispositif selon revendication 2 ou 3,
**caractérisé en ce que** plusieurs unités (2), qui comprennent au moins une unité d'épandage de lisier (3) et au moins un coutre en forme de disque (4), de préférence deux unités d'épandage de lisier (3) et deux coutres en forme de disque (4), sont fixées les unes à côté des autres sur la traverse (1), transversalement par rapport à la direction de marche (21).

5. Dispositif selon l'une ou plusieurs des revendications précédentes,
**caractérisé en ce que** la plage de réglage (ß) du support (6) autour de l'axe (16, 17) sensiblement perpendiculaire à la surface du sol est de + / - 5 ° à + / - 20 °.

6. Dispositif selon la revendication 5,
**caractérisé en ce que,** pour le réglage du support (6) autour de l'axe vertical (16, 17), un dispositif de réglage mécanique ou hydraulique (8) est prévu.

7. Dispositif selon la revendication 6,
**caractérisé en ce que** le dispositif de réglage mécanique ou hydraulique (8) est doté d'une liaison rainure et languette (18, 19).

8. Dispositif selon revendication 5 ou 6,
**caractérisé en ce que** le dispositif d'ajustement mécanique ou hydraulique (8) est doté d'une tige de réglage (20) ou d'un cylindre hydraulique (27).

9. Dispositif selon l'une ou plusieurs des revendications précédentes,
**caractérisé en ce que** le coutre en forme de disque (4) est disposé entre la traverse (1) et l'unité d'épandage de lisier (3).

10. Dispositif selon l'une ou plusieurs des revendications précédentes,
**caractérisé en ce qu'au** moins une unité d'épandage de lisier (3) et au moins un coutre en forme de disque (4), de préférence deux unités d'épandage de lisier (3) et deux coutres en forme de disque (4), forment une unité (2), qui est fixée à la traverse (1), à pivotement autour d'un axe de pivotement (9) horizontal, sensiblement parallèle à la traverse (1).

11. Dispositif selon la revendication 10,
**caractérisé en ce que,** entre l' unité (2) pivotante autour de l'axe de pivotement horizontal (9) et la traverse (1), est prévu au moins un élément élastique (12, 13), qui, destiné à l'adaptation aux aspérités de la surface du sol, presse l'unité (2) en direction de la surface du sol, pendant le traitement de la surface agricole.

12. Dispositif selon l'une ou plusieurs des revendications précédentes,
**caractérisé en ce que** l'axe (5) du coutre en forme de disque (4) est, en outre, ajustable autour d'un axe oscillant (22) vertical et orienté sensiblement horizontalement par rapport à l'axe (5) du coutre.

13. Dispositif selon la revendication 12,
**caractérisé en ce que** la plage de réglage (γ) de l'axe (5) du coutre autour de l'axe oscillant (22) est de ± 10° à ± 25°.
